Europäisches Patentamt

European Patent Office

Office européen des brevets

(11) Publication number: **0 436 351 A2**

# EUROPEAN PATENT APPLICATION

(21) Application number: 90313888.1

(22) Date of filing: 19.12.90

(51) Int. Cl.⁵: **G01N 21/75**

(30) Priority: 22.12.89 GB 8929057
08.06.90 GB 9012832

(43) Date of publication of application:
**10.07.91 Bulletin 91/28**

(84) Designated Contracting States:
**AT BE CH DE DK ES FR GR IT LI LU NL SE**

(71) Applicant: **THE GENERAL ELECTRIC
COMPANY, p.l.c.
1 Stanhope Gate
London W1A 1EH(GB)**

(72) Inventor: **Weir, Donald James
Flat 2,43 Buckley Road
Kilburn, London NW6 7LX(GB)**
Inventor: **Byfield, Mark Philip
20 Milton Road
Slough, Berkshire SL2 1PF(GB)**

(74) Representative: **George, Sidney Arthur
The General Electric Company p.l.c. GEC
Patent Department(Wembley Office) Hirst
Research Centre East Lane
Wembley Middlesex, HA9 7PP(GB)**

(54) **Sensor.**

(57) The invention provides a sensor for detecting a substance which sensor includes a biological component in which electron transport may be influenced by the presence of the substance and optical means for detecting a parameter related to electron transport in the biological component or part thereof.

The invention also provides a method for detecting a substance and a process for preparing a sensor.

The sensor finds one application, by way of example, in monitoring the potability of water.

EP 0 436 351 A2

## SENSOR

The present invention relates to a sensor, a method of detecting and a process for preparing a sensor.

According to one aspect of the present invention there is provided a sensor for detecting a substance which sensor includes a biological component, in which electron transport may be influenced by presence of substance to be detected, and optical means for detecting a parameter related to electron transport in the biological component or a part thereof.

According to another aspect of the present invention there is provided a method for detecting a substance which method includes the steps of subjecting a biological component, in which electron transport may be influenced by presence of a substance to be detected, to the influence of the substance and detecting by optical means, which means includes an emitter and a detector, a parameter related to electron transport in the biological component or part thereof.

The biological component may be, for example, any suitable biological component capable of providing an electron transport chain.

One type of electron transport chain, namely a photosynthetic electron transport chain, is mentioned in the publication "Biosensors" 4 (1989) pages 299-311 (Elsevier Science Publishers Limited, England); the present invention may utilise such a chain but, as hereinafter disclosed, is not limited to photosynthetically driven electron transport chains.

It will be appreciated that an electron transport chain may also be referred to as an electron transfer chain.

The biological component may be, for example, a membrane within a cell (e.g. a thylakoid membrane) or part of the cell membrane of a cell; where, for example, the biological component is provided by using a whole cell, any suitable cell may be used to provide a biological component comprising, for example, a membrane having an electron transport chain.

Examples of types of cell which may be used as or to provide a biological component are bacteria (e.g. a cyanobacteria microorganism such as Synechococcus), algae (e.g. green algae), yeasts and plant cells.

It is to be understood that, for example, any suitable biological component capable of providing an electron transport chain may be utilised in accordance with the present invention. Thus, for example, a photosynthetically driven system may be used (i.e. a system having a photosynthetically driven electron transport chain may be used).

However, the invention is not limited to the use of such systems nor to systems which utilise electrons obtained from the splitting of water.

Thus, for example, if desired, other systems such as those driven by other energy sources may be used (e.g. a biological component or system may be used in which the catalysis of organic molecules such as carbohydrates (e.g. glucose) provides electrons to be transported along the electron transport chain). By way of further example, a mitochondrial electron transport chain may be utilised.

It is also to be understood that, in accordance with the present invention, the biological component may comprise, for example, a single component of an electron transport chain (e.g. a protein molecule) rather than a complete electron transport chain; where a single component of an electron transport chain is used such a component may be, for example, immobilised. Any suitable immobilisation technique may be used (e.g. adsorption, covalent attachment, micro-encapsulation or physical entrapment).

The substance to be detected may be, for example, any substance which is capable of influencing electron transport in the biological component such as to permit a parameter related to electron transport in the biological component or part thereof to be detected by optical means.

Thus, for example, where the sensor is to be used to indicate the potability of water, the substance may be a toxic substance or a pollutant such as one of those appearing at page 1 of United Kingdom Patent Application No. 2189605A. However, it will be appreciated that the present invention is not limited to detecting toxic substances or pollutants; thus, the invention may be utilised in the detection of, for example, other substances the presence of which it is desired to detect (e.g. chemical species which may not necessarily be regarded as a toxic substance or a pollutant).

The term "substance", meaning the substance to be detected, in this specification, embraces a substance as such or a precursor therefor.

It will be understood that the substance to be detected may influence electron transport in an electron transport chain by, for example, interfering with electron transport in the electron transport chain such as to prevent electron transport within the chain.

Also, it is to be understood that the substance to be detected may influence electron transport in an electron transport chain by, for example, interfering with a mechanism by which electrons are made available for transport along the chain.

Thus, for example, where an enzymatic reaction is used to produce electrons for subsequent transport along the electron transport chain, any substance which interferes with the enzymatic reaction such as to affect the availability of electrons for subsequent transport along the chain may be detected by detecting by optical means a parameter related to electron transport along the electron transport chain (e.g. electron flux in the electron transport chain may be utilised to detect presence of a substance which interferes with the enzymatic reaction).

Further, it is to be understood that electron transport in the electron transport chain may be monitored for example by detecting the presence or absence of an electron in the biological component or part thereof, or by detecting the frequency of presence or absence of an electron in the biological component or part thereof; this monitoring may be considered to be monitoring the state of electronic transport in the electron transport chain.

Thus, for example, where the electron transport chain includes a collection of protein molecules which chain at one end gives rise to a change in mediator oxidation/reduction state (e.g. NADPH oxidation/reduction state) due to electron transport through the chain following a suitable event at the other end of the chain (e.g. following the splitting of water or other suitable mechanism giving rise to an electron for transport through an electron transport chain), any substance which inhibits transport of electrons in the chain will affect the state of electron transport in the chain and therefore will affect the oxidation/reduction state of the mediator.

It has previously been proposed in the art to use an artificial mediator in conjunction with a whole cell as a basis for a sensing device; reference may be made in this context to the pages of the publication "Biosensors" 4 (1989) hereinbefore mentioned.

In such a sensing device a natural mediator (e.g. NADPH) is replaced by an artificial mediator (e.g. potassium ferricyanide) which can be oxidised at an electrode to give an electrical signal. It will be understood that any substance which inhibits electron transport in the electron transport chain may result in a reduction in the amount of artificial mediator available in a suitable state for oxidation at the electrode with a resulting reduction in electrical signal.

However, a sensor device such as that to which reference was made immediately hereinbefore may suffer from one or more disadvantages such as the following:

(a) continuous addition of an artificial mediator may be required;

(b) since the artificial mediator tends to starve a cell of energy, continuous exposure of the cell to artificial mediator tends to limit sensor lifetime, thus necessitating replacement after a relatively short time;

(c) transport of electrons from the cell to the electrode is generally the rate determining step;

(d) the sensing device may be relatively non-specific since anything which interferes with the electron transport chain may give rise to a reduction in electrical signal generation at the electrode.

By way of further explanation in relation to (d) of the immediately preceding paragraph it may be noted that electron transport may be inhibited at any one of a number of points on the chain depending upon the substance present to cause interference. Thus, for example, where an electron transport chain comprises a collection of protein molecules, such as those present in the cell membrane of a cell such as a cyanobacteria, electron transport between any two molecules in the chain may, in principle, be interrupted. Thus, although one substance may serve to inhibit electron transport at, say, one point "up stream" of the chain access point for benzoquinone (thus influencing mediator production) another substance may inhibit electron transport at another point in the chain such as to influence the oxidation/reduction state of the mediator.

Accordingly, the sensing device of the prior art may detect the presence of interfering substances without the ability to distinguish between said substances.

The sensor of the present invention may be used substantially to avoid or overcome one or more of the disadvantages hereinbefore disclosed.

Thus, in accordance with the present invention no artificial mediator as hereinbefore mentioned is required since it is a parameter related to electron transport in the biological component or part thereof which is utilised.

Furthermore, the optical means for detecting the parameter of the biological component and/or the biological component may be chosen, for example, such that the parameter is characteristic of the biological component or part thereof so as to offer the possibility of greater specificity in the detection of substances.

Thus, for example, in one embodiment of the present invention, the parameter to be detected may be an absorption spectrum, or part thereof, of the biological species or part thereof.

The absorption spectrum may be, for example, in the visible/u.v. wavelength regions. However, the present invention is not limited to such wavelength regions and thus as used in the Specification "optical mean" in is not limited to any particular wavelength.

Furthermore, the optical means is not, by way of further example, limited to these for detecting absorption spectra since any suitable optical means for detecting a parameter related to electron transport in the biological component, or part thereof, may be used in accordance with the present invention.

Thus, by way of further example, an entity may be included in the sensor which entity is capable of emitting energy upon receiving an electron from the biological component or part thereof thereby to enable emission from the entity to be detected by optical means to indicate the presence or absence of a substance to be detected; such an entity may be, for example, a fluorophore the light emission of which may be triggered by electron acceptance.

It will be appreciated that the presence of a substance to be detected may influence electron transport in the biological component or part thereof (e.g. a component or components of an electron transport chain) such as to give rise to an electron or electrons for reception by the entity.

Thus, for example, a substance to be detected may inhibit electron transport along an electron transport chain such that an electron becomes or electrons become available to interact with the entity at an intermediate position along the electron transport chain.

By way of example, the entity may be substantially non-toxic with respect to the biological component or part thereof.

By way of further example, an entity may be included in the sensor which entity comprises a fluorescent redox-active species (which may also be considered to be a fluorescent redox-active mediator) which species is capable of accepting an electron from the biological component or part thereof and capable of exhibiting fluorescence (e.g. emission or excitation) in one of its redox states (e.g. fluorescent when in the oxidised form and non-fluorescent when in the reduced form). Also, by way of example, the biological component or part thereof may be a component or components of an electron transport chain (e.g. such as that of a photosynthetic electron transport chain or of a mitochondrial electron transport chain).

Where a fluorescent redox-active species is used, the presence or absence of a substance to be detected may be determined, for example, by observing the oxidation state of the fluorescent redox-active species as indicated by its fluorescence characteristics or lack of fluorescence.

It will be understood that by selecting the fluorescent redox-active species it may be possible to arrange for fluorescence to occur either in the presence of a substance to be detected or in the absence of a substance to be detected.

It will also be understood that, by way of example, an excitation energy may be applied to the fluorescent redox-active species to cause it to produce fluorescent emission. By way of example the wavelength of the excitation energy and the wavelength of the fluorescent emission may be arranged so as not to coincide with wavelengths which give rise to substantial absorption by or emission from materials other than those involved in the detection of the substance to be detected; in this way interference from, for example, natural biomolecules may be substantially avoided.

The fluorescent redox-active species may be selected, for example, to have a redox potential which is at least 200mV more positive than the biological component or part thereof so as to encourage electron transfer.

The fluorescent redox-active species may have, for example, a molecular structure which facilitates the formation of a charge transfer complex to promote electron transport.

By way of further example the fluorescent redox-active species may be incorporated into an immobilised microorganism layer said layer providing the biological component or part thereof in which electron transport may be influenced by the presence of the substance to be detected.

Such incorporation may be achieved, for example, by non-specific doping into a growth medium or by specific covalent attachment (e.g. to a cellular or electron transport component).

The choice of fluorescent redox-active species may be used, for example, to select the substance which may be detected; thus, for example, points on the biological component or part thereof (e.g. points on an electron transport chain) which cannot interact with species due to energetic (redox) reasons or steric reasons (e.g. the inability to form an effective charge-transfer complex) will not lead to a change in the oxidation state of the species.

Thus, the present invention further provides a method for detecting a substance which method includes the steps of subjecting a biological component, in which biological component or part thereof electron transport may be influenced by the presence of a substance, to the influence of the substance, said biological component being in communication with a fluorescent redox-active species capable of accepting an electron from the biological component or part thereof and said species being capable of exhibiting fluorescence in one of its redox states, and observing the fluorescence characteristics of the said species.

By way of further example, the present invention provides a sensor which includes a biological component which biological component or part thereof is such that it is capable of giving rise to fluorescence (e.g. by emission and/or excitation) the fluorescence transient characteristics of which may be affected by the presence of a substance which influences electron transport in the biological component or part thereof, and means for detecting the fluorescence transient characteristics.

It will be understood, therefore, that detecting by optical means a parameter related to electron transport in a biological component or part thereof, embraces detecting by measurement and/or observation of kinetic or transient chacteristics of an optical phenomenon (e.g. fluorescence kinetics, or kinetic or transient responses of an optical phenomenon); the kinetic or transient characteristics may be, for example, those of any suitable biological component or part thereof (e.g. an electron transport chain or a specific component of an electron transport chain).

The biological component may be, for example, immobilised. Any suitable immobilisation technique may be used (e.g. adsorption, covalent attachment, micro-encapsulation or physical entrapment).

The application of photo-energy to a suitable biological component (e.g. illumination by light of a suitable wavelength) may produce, for example, fluorescence which has two distinct fluorescence components namely an immediate fast fluorescence transient component and a subsequent slow ("delayed") fluorescence transient component.

The presence of a substance which affects electron transport in the biological component, or part thereof, such as to influence either or both of these fluorescence components may be detected by observing the fast transient component and/or the slow transient component.

For example, where a biological component or part thereof is such that electron transport therein involves the transport of electrons into a photosystem II function, the presence of a substance which inhibits such electron transport may affect the fluorescence transient components and thus be detected (e.g. the substance may cause an increase in the fast fluorescence transient component and substantially reduce or abolish the slow fluorescence transient component).

Examples of biological components which may have the ability to exhibit fast and slow fluorescence transient components, which components may be influenced by the presence of a substance to be detected, are algae, photosynthetic bacteria and chloroplasts, which contain photosynthetic reaction centres having photopigment complexes.

For example, phycobiliproteins possess fluorescence bands in the range 580-680nm and various forms of chlorophyll fluoresce in the 680-750nm region. Selection of a suitable excitation wavelength may enable, for example, measurement of fluorescence emissions due to chlorophyll only (e.g. the Chla band at 685nm).

A sensor in accordance with the present invention therefore may, for example, include an immobilised layer of a photosynthetic bacterium or alga in communication with an optical transduction system.

The optical transduction system may include for example, a means for effecting the controlled excitation of fluorescence in the bacterium or alga and/or means for detection and/or measurement of energy emitted in response.

In accordance with an embodiment of the present invention the fast fluorescence transient component may be observed at a predetermined time or times so as to permit the presence or absence of a substance to be detected; the fast fluorescence transient component may, for example, be observed at a predetermined time or times prior to fluorescence saturation.

In one example of a sensor in accordance with the present invention photosynthetic bacterial cells or alga cells may be maintained in a substantially dark environment and be subjected to pulses of light of a selected wavelength (e.g. 600nm) and selected duration (e.g. 1 minute illumination followed by a 1 minute period of darkness) and the intensity of fluorescence may be measured at a predetermined time interval (e.g. 0.5 sec.) after the onset of illumination in each pulse.

It will be appreciated that the presence of a substance (e.g. a photosystem II inhibitor) which influences electron transport in the cells or part thereof may be detected by comparing the characteristics of fluorescence transient components with the characteristics of fluorescence transient components in the absence of the substance.

It will also be appreciated that, by way of example, the pulses of light may serve the dual purposes of maintaining cell viability by stimulating photosynthetic energy generation and inducing detectable fluorescence (e.g. in the 685nm band).

In one embodiment of the first aspect of the present invention hereinbefore disclosed there is provided a sensor for detecting a substance which sensor comprises a biological component and optical means for detecting a parameter related to electron transport in the biological component or part thereof wherein the optical means for detecting a parameter related to electron transport in the biological component or part thereof includes an emitter and a detector.

The emitter may be any suitable emitter means, examples of which are a laser, a light emitting diode and an optical fibre.

The detector may be any suitable detector means such as a photo-detector, for example.

The emitter and detector may be, for example, operated in accordance with suitable known techniques using suitable known apparatus as required.

In another embodiment of the present invention there is provided a sensor for detecting a substance which sensor comprises a layer of cells, capable of providing a biological component, sandwiched between an optical emitter and an optical detector.

Where, by way of example, an emitter and a detector are used in accordance with the present invention the emitter and detector may be arranged, for example, to co-operate so that together they form an optical means which may be specific to one wavelength or to a number of wavelengths.

Thus, for example, an optical means comprising an emitter and a detector may be arranged to be specific to one wavelength or to a number of wavelengths by using an emitter capable of specific emission and/or using a detector capable of specific detection and/or by using filters interposed in an optical path between an emitter and a detector.

It has hereinbefore been disclosed that electron transport in the electron transport chain may be monitored for example by detecting the presence or absence of an electron in the biological component, or part thereof.

Thus, for example, if an absorption spectrum, or a part thereof, is used as a parameter to be detected, it will be understood that the spectrum or part thereof may differ depending upon whether, or not, electrons are passing along an electron transport chain.

Accordingly, by observing an absorption spectrum or part thereof the presence or absence of a substance capable of influencing electron transport in an electron transport chain may be detected.

Thus, by way of further example, the present invention further provides a method for detecting a substance, which method includes the step of subjecting a biological component, in which electron transport may be influenced by presence of a substance, to the influence of the substance, applying electro-magnetic energy, such as photo-energy, to the biological component and observing an absorption spectrum, or part thereof, of the biological component or part thereof.

It is to be understood that, by way of example, it may be possible to arrange for the presence of a substance to be detected to give rise to a reduction in observed intensity in an absorption spectrum or part thereof (e.g. by choosing to observe at a selected wavelength or wavelength region). However, it is further to be understood that it is possible alternatively, by way of example, to arrange for presence of the substance to give rise to an increase in observed intensity in an absorption spectrum or a part thereof (eng. by choosing to observe at a selected wavelength or wavelength region); it is to be understood further that this increase in observed intensity may be achieved, for example, by choosing a wavelength or a wavelength region in which a peak occurs when the biological component or part thereof is in a state of electron transport activity which is reduced compared with normal. The term "normal" in the immediately preceding sentence means the situation which obtains when substance to be detected is not present and electron transport occurs as is usual for a given electron transport chain.

Where photo-energy (e.g. white light) is applied to a biological component in order to enable an absorption spectrum to be produced, and also where the biological component has a photosynthetic electron transport chain, it may be possible, if desired, to utilise the photo-energy both to produce the absorption spectrum and to "drive" the photosynthetic electron transfer chain.

In accordance with a further embodiment of the present invention a sensor may include a support material for the biological component.

Optionally, an emitter and/or a detector may be carried by a support material.

The support material may, for example, be a silicon wafer.

By way of further example, a support material may be subjected to micromachining to provide thereon or therein a region or area for accommodating a biological component.

It will be understood that micromachining may be carried out in any suitable manner such as those known for constructing structures on a small (e.g. micron) scale (e.g. photolithography).

Thus, in a further embodiment a support material may be constructed so as to be suitable for accommodating a whole cell or a plurality of whole cells.

For example, a suitable support material (e.g. a silicon wafer) may be provided with a groove into which a plurality of substantially rectangular microorganism cells may fit "end-to-end"; by providing an emitter at one end of the groove and a detector at the other end of the groove, energy passing through a plurality of cells (and hence encountering a plurality of electron transfer chains) may be monitored to enable the presence or absence of a substance to be detected.

By way of example, more than one groove with cells may be used; one of a plurality of grooves with cells may, optionally, be used to produce a reference signal.

According to a further aspect of the present invention there is provided a process for the preparation of a sensor, the sensor including a biological component, in which electron transport may be influenced by the presence of a substance to be detected, and optical means for detecting a parameter related to electron transport in the biological component or part thereof, which process includes the step of depositing a biological component on a support material.

Optionally, a biological component may be deposited on a support material and immobilised thereon.

Immobilisation may be carried out in any suitable manner, one example of which is growing of biological component into a defined region of a support material.

The present invention also provides a method for the detection of a substance which method includes using a sensor in accordance with the present invention.

It is to be understood that the term "parameter" as used in this Specification includes any property related to electron transport in a biological component or part thereof, which property is detectable by optical means.

## Claims

1. A sensor for detecting a substance which sensor includes a biological component, in which electron transport may be influenced by presence of substance to be detected, and optical means for detecting a parameter related to electron transport in the biological component or a part thereof.

2. A sensor as claimed in Claim 1 characterised in that the optical means includes an emitter and a detector.

3. A sensor as claimed in Claim 2 characterised in that the sensor comprises a layer of cells, capable of providing a biological component, sandwiched between an optical emitter and an optical detector.

4. A sensor as claimed in Claim 2 or Claim 3 characterised in that the emitter and detector are arranged to co-operate so that together they form an optical means which may be specific to one wavelength or to a number of wavelengths.

5. A sensor as claimed in Claim 1 characterised in that the sensor includes a support material for the biological component.

6. A sensor as claimed in Claim 5 characterised in that the support material is subjected to micromachining to provide thereon or therein a region or area for accommodating a biological component.

7. A sensor as claimed in Claim 5 or Claim 6 characterised in that the support material is constructed so as to be suitable for accommodating a whole cell or a plurality of whole cells.

8. A sensor as claimed in any one of Claims 1 to 7 characterised in that the biological component provides an electron transport chain comprising a photosynthetic electron transport chain or a mitochondrial electron transport chain.

9. A sensor as claimed in any one of Claims 1 to 5 characterised in that the biological component comprises a single component of an electron transport chain.

10. A sensor as claimed in Claim 9 characterised in that the single component is immobilised.

11. A method for detecting a substance, which method includes the steps of subjecting a biological component, in which electron transport may be influenced by presence of a substance to be detected, to the influence of the substance and detecting by optical means, which means includes an emitter and a detector, a parameter related to electron transport in the biological component or part thereof.

12. A method as claimed in Claim 11 characterised in that the biological component is provided by a whole cell or the biological component is a membrane within a cell, or part of a cell membrane or a single component of an electron transport chain.

13. A method as claimed in Claim 12 characterised in that the biological component is provided by a whole cell and the cell is a bacterium, an alga, a yeast or a plant cell.

14. A method as claimed in any one of Claims 11, 12 or 13 characterised in that the biological component provides an electron transport chain which comprises a photosynthetic electron transport chain or a mitochondrial electron transport chain.

15. A method as claimed in any one of Claims 11, 12, 13 or 14 characterised in that the substance to be detected is a toxic substance or a pollutant.

16. A method as claimed in any one of Claims 11, 12, 13, 14, or 15 characterised in that the parameter is an absorption spectrum or a part thereof.

17. A method as claimed in any one of Claims 11, 12, 13, 14, 15 or 16 characterised in that an entity is used which entity is capable of emitting energy upon receiving an electron from the biological component or part thereof thereby to enable emission from the entity to be detected by optical means to indicate the presence or absence of a substance to be detected.

18. A method as claimed in Claim 17 characterised in that the entity comprises a fluorescent redox-active species which is capable of accepting an electron from the biological component or part thereof and capable of exhibiting fluorescence in one of its redox states.

19. A method as claimed in any one of Claims 11, 12, 13, 14 or 15 characterised in that the biological component or part thereof is such that it is capable of giving rise to fluorescence the fluorescence transient characteristics of which may be affected by the presence of a substance which influences electron transport in the biological component or part thereof and fluorescence transient characteristics are detected.

20. A method as claimed in Claim 16 characterised by including the step of subjecting a biological component in which electron transport may be influenced by presence of a substance to the influence of the substance, applying electro-magnetic energy to the biological component and observing an absorption spectrum, or part thereof, of the biological component or part thereof.

21. A method as claimed in any one of Claims 11, 12, 13, 14 or 15 characterised in that photoenergy is applied to a biological component or part thereof such that fluorescence is produced which fluorescence has two distinct fluorescence components comprising a fast transient component and a slow transient component.

22. A process for the preparation of a sensor, the sensor including a biological component, in which electron transport may be influenced by the presence of a substance to be detected, and optical means for detecting a parameter related to electron transport in the biological component or part thereof, which process includes the step of depositing a biological component on a support material.